# EUROPÄISCHE PATENTSCHRIFT

(11) **EP 3 938 749 B1**
(45) Veröffentlichungstag und Bekanntmachung des Hinweises auf die Patenterteilung: **28.06.2023**
(21) Anmeldenummer: 20708401.3
(22) Anmeldetag: 25.02.2020
(51) Int. Cl.: G01L 5/00, B23Q 17/09, G01L 5/24

(54) **MESSSYSTEM FÜR DEN EINBAU ZWISCHEN MOMENT- UND/ODER KRAFTÜBERTRAGENDEN MASCHINENTEILEN**
MEASUREMENT SYSTEM FOR INSTALLATION BETWEEN TORQUE- AND/OR FORCE-TRANSMITTING MACHINE PARTS
SYSTÈME DE MESURE POUR LE MONTAGE ENTRE DES PIÈCES DE MACHINE DE TRANSMISSION DE COUPLE ET/OU DE FORCE

(30) Priorität: 11.03.2019 AT 501992019
(43) Veröffentlichungstag der Anmeldung: 19.01.2022
(73) Patentinhaber: Piezocryst Advanced Sensorics GmbH, 8020 Graz (AT)
(72) Erfinder: SCHRICKER, Alexander, 8046 Graz (AT); HIRSCHLER, Michael, 8020 Graz (AT); DREISIEBNER, Franz, 8010 Graz (AT); GERSTL, Erik, 8010 Graz (AT)
(74) Vertreter: Babeluk, Michael
(86) Internationale Anmeldenummer: PCT/AT2020/060051
(87) Internationale Veröffentlichungsnummer: WO 2020/181306

(56) Entgegenhaltungen:
- EP-A1- 0 270 693
- EP-B1- 0 270 693
- WO-A1-2016/193158
- CH-A- 500 602
- DE-B2- 1 929 478
- US-A- 3 931 388
- US-A- 4 312 241
- US-A- 4 741 231

## Beschreibung

Die Erfindung betrifft ein Messsystem mit einer flach bauenden, im Wesentlichen parallele Deckflächen aufweisenden Messelementaufnahme, geeignet für den Einbau zwischen moment- und/oder kraftübertragenden Maschinenteilen, mit zumindest einem piezoelektrischen Messelement, wobei das Messelement in einer Durchgangsöffnung der Messelementaufnahme angeordnet ist. Weiters betrifft die Erfindung ein Messelement mit parallelen, krafteinleitenden Grenzflächen und einer Umfangsfläche, mit zwischen den Grenzflächen angeordneten, piezoelektrischen Messelementscheiben.

Eine Messaufgabe für piezoelektrische Sensoren bzw. einem Messsystem mit mehreren Messelementen ist die Messung von Momenten und Querkräften zwischen zwei Maschinenteilen. Die Maschinenteile können an der zu vermessenden Stelle beispielsweise jeweils einen Flansch aufweisen. Das Messsystem ist bei geringer Bauhöhe so flach wie möglich auszulegen, damit zusätzliche mechanische Anpassungen z.B. in einem Wellenverbund, um die Bauhöhe des Messsystems auszugleichen, idealerweise entfallen können. Die einzelnen Messelemente des Systems müssen für die Messaufgabe in deren Lage fixiert sein, damit die Montage erleichtert wird und deren Lage zueinander für die nachfolgende Auswertung bekannt ist. Die Messelemente werden mechanisch zwischen den beiden Maschinenteilen eingespannt, beispielsweise über die Spannschrauben benachbarter Flansche.

In diesem Zusammenhang ist aus der EP 0 459 068 B1 ein flach bauender Dünnscheiben-Kraftsensor bekannt geworden, dessen Einbauhöhe derjenigen normaler standardisierter Unterlagscheiben entspricht, sodass er zur dynamischen Kraftmessung von Schraubenkräften eingesetzt werden kann, wozu eine Auswechslung mit der Unterlagscheibe nötig ist. Ein Einbau ohne mechanische Bearbeitung des Einbau-Umfeldes wird dadurch möglich. Um die eingebauten Piezoscheiben nicht zu brechen, werden Messelemente eingesetzt, die nur Teilkräfte der Gesamtschraubenkraft messen und einen Durchmesser aufweisen, der Bruchgefahr ausschließt. Zur Unterdrückung der Wirkung der vorhandenen Spaltfederschichten werden die Messelemente unter hoher mechanischer Vorspannung in die Sensoraufnahme eingeschweißt. Hierauf werden die Oberflächen überschliffen und ev. geläppt. Anschließend müssen die Oberflächen der Messelemente noch mit einem Aufdampfbelag versehen werden, um deren Kraftmessanteil zu erhöhen. Ein wesentlicher Nachteil besteht darin, dass durch die Schweißverbindung der Messelemente mit der Messelementaufnahme Störgrößen in die Messelemente eingeleitet werden. Weiters ist die Materialauswahl für die Messelement- bzw. Sensoraufnahme begrenzt, da nur wenige Materialien für das Verscheißen mit den Messelementen geeignet sind.

Weiters ist aus der DE 43 40 670 C2 eine Vorrichtung zum Messen der auf Maschinenteile wirkenden Kräfte und Momente bekannt geworden. In einer zwischen zwei Maschinenteilen angeordneten Zwischenplatte sind in entsprechenden Durchgangsbohrungen piezoelektrische Druckmesselemente angeordnet. Dabei sind die Messelemente in den entsprechend größeren Bohrungen der Zwischenplatte in einer weichen, dauerelastischen Vergussmasse positioniert. Zum Ausgleich von Höhenunterschieden sind zusätzlich planparallele Adapterscheiben über bzw. unter den Messelementen vorgesehen. Nachteilig ist die aufwendige Herstellung der Messvorrichtung, wobei die Zwischenplatte nach dem Einbringen der Vergussmasse und der Anbringung der Adapterscheiben beidseitig überschliffen werden muss. Zusätzlich kann nicht ausgeschlossen werden, dass durch die Vergussmasse Störgrößen in die Messelemente eingeleitet werden. Dokument US4312241 offenbart eine Kraftmesszelle mit einem piezoelektrischen Messelement, welches durch ein Ring in eine Öffnung im Gehäuse fixiert ist.

Aufgabe der vorliegenden Erfindung ist es, ein flach bauendes Messsystem mit zumindest einem in einer Messelementaufnahme gehaltenen Messelement der eingangs beschrieben Art zu verbessern, dahingehend, dass das Messelement in einer definierten Lage gehalten wird, wobei die Einleitung von Störgrößen - bedingt durch unterschiedliche Wärmedehnung sowie Unebenheiten und Lagetoleranzen der angrenzenden Maschinenteilteile - weitgehend vermieden wird. Erfindungsgemäß wird dies dadurch erreicht, dass das zumindest eine Messelement mit definiertem Spiel mechanisch in der Durchgangsöffnung der Messelementaufnahme fixiert ist.

Durch die schwimmende Lagerung werden Unebenheiten und Lagetoleranzen der angrenzenden Maschinenteilteile kompensiert. Das Messelement bzw. die Messelemente eines derartigen Messsystems sind weder durch Schweiß- oder Klebeverbindungen noch durch eine elastische Vergussmasse mit der Messelementaufnahme verbunden, sondern schwimmend (d.h. mit genügend Spiel in allen Raumrichtungen lagefixiert) in den Durchgangsöffnungen gelagert, sodass keinerlei störende Haltekräfte in die Messelemente eingestreut werden können. Geringfügige Bauteilunterschiede können durch das vorhandene Spiel zwischen den Messelementen und der Messelementaufnahme ausgeglichen werden.

Dadurch, dass keine Verschweißung mit den Messelementen erfolgt, können unterschiedliche Materialien für die Messelementaufnahme, wie Stahl, Aluminium, unterschiedliche Aluminiumlegierungen oder auch Kunststoffe eingesetzt werden. Piezoelektrische Messelemente sind nicht notwendigerweise aus demselben Material gefertigt, wie die angrenzenden Maschinenteile. Um negative Effekte aufgrund unterschiedlicher Wärmedehnung zu verringern ist es vorteilhaft die Messelementaufnahme aus demselben Material wie die angrenzenden Maschinenteile zu fertigen.

Erfindungsgemäß weist das zumindest eine Messelement an seiner Umfangsfläche Strukturen auf, die mit Spiel in zumindest eine Raumrichtung parallel zu den Deckflächen und/oder normal zu den Deckflächen der Messelementaufnahme in entsprechende Strukturen an der Umfangswand der Durchgangsöffnung eingreifen, wobei unterschiedliche Ausführungsvarianten zum Einsatz kommen.

Gemäß einer ersten Ausführungsvariante der Erfindung ist an der Umfangsfläche des zumindest einen Messelementes eine Ringnut ausgebildet, die zumindest ein Federelement aufnimmt, wobei das Federelement in eine Ringnut in der Umfangswand der Durchgangsöffnung eingreift. Die Fertigung des Messsystems wird dadurch wesentlich vereinfacht. Es muss lediglich eine an die jeweilige Messsituation angepasste Messelementaufnahme, beispielsweise eine auf einen Flansch in einem Wellenverbund abgestimmte, dünne, kreisringförmige Messelementaufnahme durch 3D-Druck oder CNC-Fräsen hergestellt werden, wonach die einzelnen Messelemente in die Durchgangsöffnungen eingeklipst werden können.

In einer weiteren vorteilhaften Variante der Erfindung ist an dem zumindest einen Messelement ein Umfangssteg ausgebildet, der in eine Ringnut in der Durchgangsöffnung eingreift, wobei die Ringnut einerseits von einem Basisteil und andererseits von einer in das Basisteil einsetzbaren Abdeckung der Messelementaufnahme begrenzt ist. Beim Zusammenbau des Messsystems werden die einzelnen Messelemente mit geringem Spiel zur Durchgangsöffnung in die Messelementaufnahme eingelegt, die Verkabelung in das Basisteil eingefügt und nach der Befestigung der Abdeckung mit Spiel mechanisch fixiert.

Gemäß einer besonders vorteilhaften Ausführungsvariante der Erfindung kann zumindest eine Durchgangsöffnung in der Messelementaufnahme als Langloch ausgeführt sein. Durch eine Kombination von Langlöchern und kreisförmigen Durchgangsöffnungen in einer Messelementaufnahme kann trotz schwimmender Lagerung eine hohe Positioniergenauigkeit erzielt werden.

Ein erfindungsgemäßes Messelement zeichnet sich somit dadurch aus, dass die Umfangsfläche des Messelements Strukturen aufweist, mittels welcher das Messelement in einer Messelementaufnahme mit Spiel mechanisch fixierbar ist.

Die Erfindung wird im Folgenden anhand von Ausführungsbeispielen näher erläutert. Es zeigen:
- Fig. 1: ein erfindungsgemäßes Messsystem mit mehreren in einer kreisringförmigen Messelementaufnahme angeordneten Messelementen in einer Draufsicht;
- Fig. 2: ein vergrößertes Detail des Messsystems im Bereich eines Messelements in einer Explosionsdarstellung;
- Fig. 3: eine Schnittdarstellung eines Messelements in Einbaulage gemäß Linie III-III in Fig. 1;
- Fig. 4: eine Ausführungsvariante des Messelements in einer Schnittdarstellung gemäß Fig. 3;
- Fig. 5: das Basisteil der Messelementaufnahme ohne Abdeckung in einer dreidimensionalen Darstellung;
- Fig. 6: ein Detail einer Ausführungsvariante des erfindungsgemäßen Messsystems in einer Explosionsdarstellung;
- Fig. 7: ein Detail einer Durchgangsöffnung (Langloch) in der Messelementaufnahme; sowie
- Fig. 8: die Durchgangsöffnung gemäß Fig. 7 mit eingesetztem Messelement.

Funktionsgleiche Teile sind in den Ausführungsvarianten mit gleichen Bezugszeichen versehen.

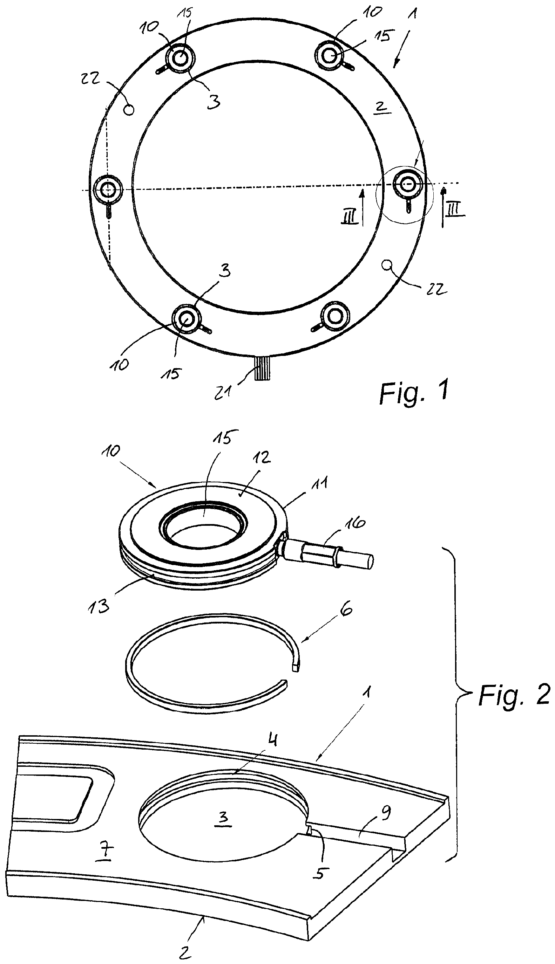

Die in den Fig. 1 bis Fig. 3 dargestellte erste Ausführungsvariante des erfindungsgemäßen Messsystems weist eine dünne, flach bauende Messelementaufnahme 1 mit planparallelen Deckflächen 2 auf, die kreisringförmig ausgebildet ist und zwischen moment- und/oder kraftübertragenden Maschinenteilen (nicht dargestellt) eingebaut werden kann. Im dargestellten Beispiel sind sechs Messelemente 10 mit gleichem Abstand in Umfangsrichtung in entsprechenden Durchgangsöffnungen 3 der Messelementaufnahme 1 an den gewünschten Messstellen positioniert, und werden in der Messelementaufnahme 1 schwimmend gelagert, d.h. mit definiertem Spiel mechanisch fixiert.

Dazu weist jedes der kreisringförmigen Messelemente 10 an seiner äußeren Umfangsfläche 11 Strukturen auf, die mit Spiel in zumindest eine Raumrichtung parallel und/oder normal zu den Deckflächen 2 der Messelementaufnahme 1 in entsprechende Strukturen an der Umfangswand 4 der Durchgangsöffnung 3 eingreifen.

Im dargestellten Beispiel gemäß Fig. 1 bis Fig. 3 ist an der Umfangsfläche 11 jedes Messelements 10 eine Ringnut 13 ausgebildet, die zumindest ein Federelement 6 aufnimmt, wobei das Federelement 6 in eine Ringnut 5 in der Umfangswand 4 der Durchgangsöffnung 3 eingreift.

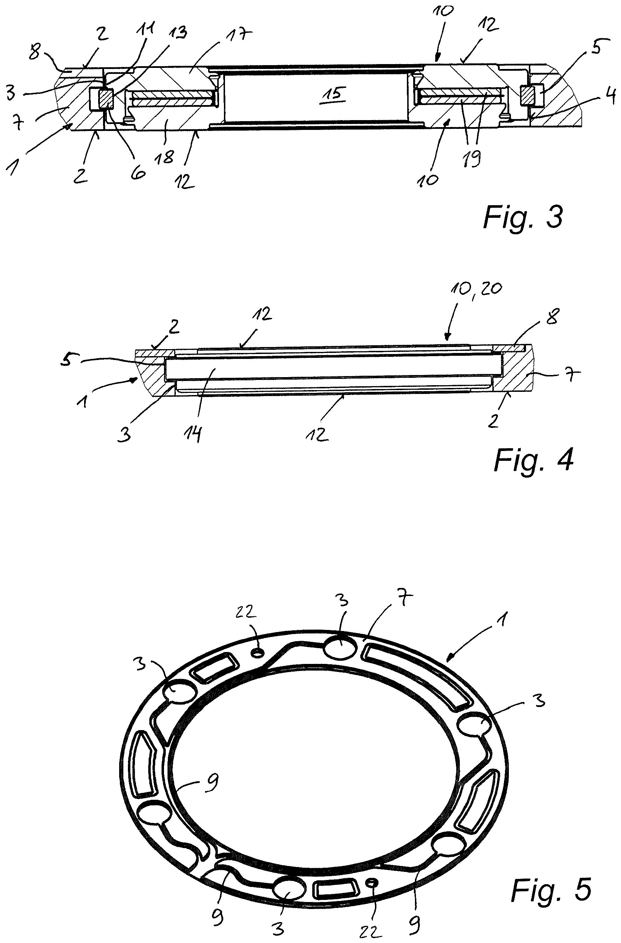

Beim Einbau der Messelemente 10 in die Messelementaufnahme 1 wird zunächst das beispielsweise als einseitig offene Ringfeder ausgebildete Federelement 6 in die Ringnut 5 der Messelementaufnahme 1 eingesetzt und mit einem Hilfsmittel (z.B. ein Dorn) derart aufgeweitet, dass das Messelement 10 in die Durchgangsöffnung 3 eingeschnappt werden kann und danach die Ringfeder in die Ringnut 13 des Messelements 10 einrastet (siehe Fig. 3).

Die Tiefe der Ringnut 5 in der Messelementaufnahme 1 reicht aus um die Ringfeder 6 beim Einbau des Messelements 10 zur Gänze aufzunehmen. Weiters ist die Breite der Ringnut 5 geringfügig größer als die Breite der Ringfeder 6, sodass ein Spiel im Bereich von 0,01 mm bis 0,5 mm in eine Richtung normal zu den Deckflächen 2 der Messelementaufnahme 1 eingestellt werden kann.

Weiters ist der äußere Durchmesser des Messelements 10 geringfügig kleiner als der Durchmesser der Durchgangsöffnung 3, sodass ein Spiel im Bereich von 0,01 mm bis 0,5 mm in alle Richtungen parallel zu den Deckflächen 2 der Messelementaufnahme 1 eingestellt werden kann.

Die krafteinleitenden Grenzflächen 12 des Messelements 10 ragen geringfügig, beispielsweise > 0,01 mm, über die planparallelen Deckflächen 2 der Messelementaufnahme 1 hinaus, wodurch eine Messung in direktem Kraftschluss der Messelemente 10, ohne störenden Kraftnebenschluss durch die Messelementaufnahme 1, gewährleistet ist.

Die kreisringförmigen Messelemente 10 gemäß Fig. 1 bis Fig. 3 weisen zentrale Durchgangsöffnung 15 auf, welche Schrauben oder Befestigungsmittel aufnehmen können, mit welchen angrenzende Maschinenteile, beispielsweise Flansche eines Wellenverbundes verschraubt sein können (nicht dargestellt).

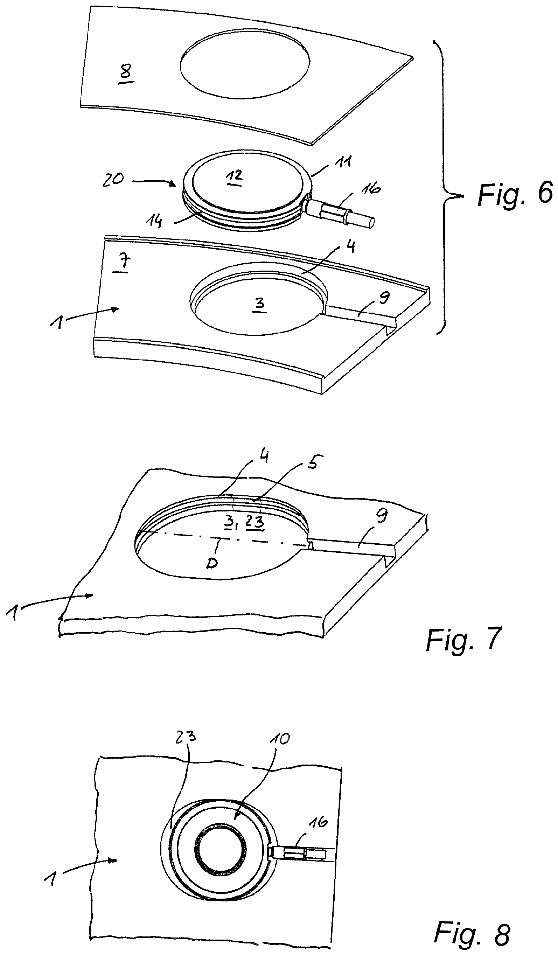

In der Schnittdarstellung gemäß Fig. 3 ist das Messelement 10 als asymmetrischer Kreisringsensor mit geringer Bauhöhe, beispielsweise im Bereich von 2 mm bis 6 mm dargestellt, dessen beide Gehäusehälften 17, 18 zwei Messelementscheiben 19 aufnehmen. Es können jedoch auch andere Kreisringsensoren sowie auch kreisförmige Messelemente 20 ohne Durchgangsöffnung eingesetzt werden (siehe Fig. 6).

Weiters kann das Messelement 10 auch mehr als zwei Messelementscheiben 19 und mehrere, bevorzugt zu einem Anschlusskabel zusammengefasste Signalausgänge aufweisen, sodass mit einem Messelement 10 am selben Messort unterschiedliche Messwerte (beispielsweise eine Druck- bzw. Kraftmessung und eine Drehmomentmessung) gleichzeitig durchgeführt werden können. Zur Erfüllung mehrerer Messaufgaben an einer Messposition können auch zwei Messelemente 10 in einer Durchgangsöffnung 3 übereinander angeordnet sein.

Die Messelementaufnahme 1 weist ein Basisteil 7 und eine in das Basisteil 7 einsetzbare Abdeckung 8 auf, wobei im Basisteil 7 ausgehend von den einzelnen Messelementen 10 Aussparungen 9 für die elektrische Kontaktierung 16 der Messelemente 10 angeordnet sind. Die einzelnen Signalleiter der Messelemente 10 werden zu einem Steckerelement 21 am äußeren Umfang der kreisringförmigen Messelementaufnahme 1 zusammengeführt.

Die Ausführungsvariante gemäß Fig. 4 zeigt ein Messsystem bei dem am Messelement 10 ein Umfangssteg 14 ausgebildet ist, der in eine Ringnut 5 in der Durchgangsöffnung 3 der Messelementaufnahme 1 eingreift, wobei die Ringnut 5 einerseits von einem Basisteil 7 und andererseits von einer in das Basisteil 7 einsetzbaren Abdeckung 8 der Messelementaufnahme 1 begrenzt ist. Die krafteinleitenden Grenzflächen 12 des Messelements 10 ragen auch bei dieser Variante geringfügig über die planparallelen Deckflächen 2 der Messelementaufnahme 1 hinaus, sodass ohne störenden Kraftnebenschluss durch die Messelementaufnahme 1 direkt im Kraftschluss der Messelemente 10 gemessen werden kann.

Die Breite der Ringnut 5 ist geringfügig größer als die Breite des Umfangsteges 14, sodass ein Spiel im Bereich von 0,01 mm bis 0,5 mm in eine Richtung normal zu den Deckflächen 2 der Messelementaufnahme 1 eingestellt werden kann.

Weiters ist auch bei dieser Variante der Erfindung der Durchmesser des Messelements 10 (mit zentraler Durchgangsöffnung 15) bzw. 20 (ohne Durchgangsöffnung) geringfügig kleiner als der Durchmesser der Durchgangsöffnung 3, wobei weiters der Umfangssteg 14 einen Abstand zum Nutgrund der Umfangsnut 5 einhält, sodass ein Spiel im Bereich von 0,01 mm bis 0,5 mm in alle Richtungen parallel zu den Deckflächen 2 der Messelementaufnahme 1 eingestellt werden kann.

In Fig. 5 ist ein Basisteil 7 der zweiteiligen Messelementaufnahme 1 ohne Abdeckung 8 sowie ohne Messelemente 10 dargestellt, wobei neben den Durchgangsöffnungen 3 und Aussparungen 9 auch Öffnungen 22 für Passstifte zur Lagefixierung des Messsystems vorgesehen sind.

Die in die Messelementaufnahme 1 mit Spiel eingesetzten Messelemente 10 bzw. 20 können - in eine Richtung normal auf die planparallelen Deckflächen 2 der Messelementaufnahme 1 gesehen - kreisförmig geschlossen (siehe Fig. 6) oder kreisringförmig mit einer Durchgangsöffnung 15 (siehe Fig. 2) ausgebildet sein.

Fig. 6 zeigt eine Variante der Erfindung mit einem Messelement 20 mit geschlossenen, krafteinleitenden Grenzflächen 12, das mit einem Bund bzw. Umfangssteg 14 ausgestattet ist, der das Messelement 20 nach dem Einsetzen der Abdeckung 8 mit Spiel in Position hält. Die Einbausituation ist in der Schnittdarstellung gemäß Fig. 4 dargestellt.

Bei der in den Fig. 7 und Fig. 8 skizzierten Ausführungsvariante der Erfindung ist zumindest eine Durchgangsöffnung 3 in der Messelementaufnahme 1 als Langloch 23 ausgeführt. In Richtung des langen Durchmessers D des Langlochs 23 steht daher in dieser Variante ein vergrößertes Spiel im Bereich von einigen mm zur Verfügung. Für einzelne oder auch alle Messelemente 10, einer Messelementaufnahme 1 kann somit eine durch die Länge und Ausrichtung des Langlochs 23 definierte, asymmetrische Lagetoleranz einzelner oder aller Messelemente 10 zur Verfügung gestellt werden.

## Patentansprüche

1. Messsystem mit einer flach bauenden, im Wesentlichen parallele Deckflächen (2) aufweisenden Messelementaufnahme (1), geeignet für den Einbau zwischen moment- und/oder kraftübertragenden Maschinenteilen, mit zumindest einem piezoelektrischen Messelement (10, 20), wobei das Messelement (10, 20) in einer Durchgangsöffnung (3) der Messelementaufnahme (1) angeordnet ist, **dadurch gekennzeichnet, dass** das zumindest eine Messelement (10, 20) mit definiertem Spiel mechanisch in der Durchgangsöffnung (3) fixiert ist, derart, dass das zumindest eine Messelement (10, 20) an seiner Umfangsfläche (11) Strukturen aufweist, die mit Spiel in zumindest eine Raumrichtung parallel zu den Deckflächen (2) und/oder normal zu den Deckflächen (2) in entsprechende Strukturen an der Umfangswand (4) der Durchgangsöffnung (3) eingreifen.

2. Messsystem nach Anspruch 1, **dadurch gekennzeichnet, dass** an der Umfangsfläche (11) des zumindest einen Messelementes (10, 20) eine Ringnut (13) ausgebildet ist, die zumindest ein Federelement (6) aufnimmt, wobei das Federelement (6) in eine Ringnut (5) in der Umfangswand (4) der Durchgangsöffnung (3) eingreift.

3. Messsystem nach Anspruch 2, **dadurch gekennzeichnet, dass** das Federelement (6) als einseitig offene Ringfeder ausgebildet ist.

4. Messsystem nach Anspruch 1, **dadurch gekennzeichnet, dass** an dem zumindest einen Messelement (10, 20) ein Umfangssteg (14) ausgebildet ist, der in eine Ringnut (5) in der Durchgangsöffnung (3) eingreift, wobei die Ringnut (5) einerseits von einem Basisteil (7) und andererseits von einer in das Basisteil (7) einsetzbaren Abdeckung (8) der Messelementaufnahme (1) begrenzt ist.

5. Messsystem nach einem der Ansprüche 1 bis 4, **dadurch gekennzeichnet, dass** das zumindest eine Messelement (10, 20) - in eine Richtung normal auf die planparallelen Deckflächen (2) der Messelementaufnahme (1) gesehen - kreisförmig geschlossen oder kreisringförmig mit einer Durchgangsöffnung (15) ausgebildet ist.

6. Messsystem nach einem der Ansprüche 1 bis 5, **dadurch gekennzeichnet, dass** zumindest eine Durchgangsöffnung (3) in der Messelementaufnahme (1) als Langloch (23) ausgeführt ist.

7. Messsystem nach einem der Ansprüche 1 bis 6, **dadurch gekennzeichnet, dass** mehrere Messelemente (10, 20), bevorzugt mit gleichem Abstand in Umfangsrichtung, in einer kreisringförmigen Messelementaufnahme (1) angeordnet sind.

8. Messsystem nach einem der Ansprüche 1 bis 6, **dadurch gekennzeichnet, dass** mehrere Messelemente (10, 20) in vorgegebenen Positionen einer Kraftmessplatte angeordnet sind.

9. Messsystem nach Anspruch 7 oder 8, **dadurch gekennzeichnet, dass** die Messelementaufnahme (1) ein Basisteil (7) und eine in das Basisteil (7) einsetzbare Abdeckung (8) aufweist, wobei im Basisteil (7) ausgehend von den Positionen der einzelnen Messelemente (10, 20) Aussparungen (9) für die Aufnahme der elektrischen Kontaktierung (16) der Messelemente (10, 20) ausgebildet sind.

10. Messsystem nach einem der Ansprüche 1 bis 9, **dadurch gekennzeichnet, dass** die Messelementaufnahme (1) aus Stahl, aus Aluminium, einer Aluminiumlegierung oder aus Kunststoff gefertigt ist.

## Claims

1. Measurement system having a flat measurement element receptacle (1) having substantially parallel cover surfaces (2), suitable for installation between torque- and/or force-transmitting machine parts, having at least one piezoelectric measurement element (10, 20), wherein the measurement element (10, 20) is arranged in a through-opening (3) of the measurement element receptacle (1), **characterised in that** the at least one measurement element (10, 20) is mechanically fixed with defined play in the through-opening (3), such that the at least one measurement element (10, 20) comprises structures on its circumferential surface (11) which engage with play in at least one spatial direction parallel to the cover surfaces (2) and/or normal to the cover surfaces (2) in corresponding structures on the circumferential wall (4) of the through-opening (3).

2. Measurement system according to claim 1, **characterised in that** an annular groove (13) is formed on the circumferential surface (11) of the at least one measurement element (10, 20), which groove accommodates at least one spring element (6), wherein the spring element (6) engages in an annular groove (5) in the circumferential wall (4) of the through-opening (3).

3. Measurement system according to claim 2, **characterised in that** the spring element (6) is designed as an annular spring open on one side.

4. Measurement system according to claim 1, **characterised in that** a circumferential web (14) is formed on the at least one measurement element (10, 20), which circumferential web (14) engages in an annular groove (5) in the through-opening (3), wherein the annular groove (5) is delimited on the one hand by a base part (7) and on the other hand by a cover (8) of the measurement element receptacle (1), which cover (8) can be inserted into the base part (7).

5. Measurement system according to one of the claims 1 to 4, **characterised in that** the at least one measurement element (10, 20) - as viewed in a direction normal to the plane-parallel cover surfaces (2) of the measurement element receptacle (1) - is of circularly closed or circularly annular design having a through-opening (15).

6. Measurement system according to one of claims 1 to 5, **characterised in that** at least one through-opening (3) in the measurement element receptacle (1) is designed as an elongated hole (23).

7. Measurement system according to one of claims 1 to 6, **characterised in that** a plurality of measurement elements (10, 20) are arranged, preferably with equal spacing in the circumferential direction, in an annular measurement element receptacle (1).

8. Measurement system according to one of claims 1 to 6, **characterised in that** a plurality of measurement elements (10, 20) are arranged in predetermined positions of a force measuring plate.

9. Measurement system according to claim 7 or 8, **characterised in that** the measurement element receptacle (1) comprises a base part (7) and a cover (8) which can be inserted into the base part (7), wherein recesses (9) for the admission of electrical contacting (16) of the measurement elements (10, 20) are formed in the base part (7) starting from the positions of the individual measurement elements (10, 20).

10. Measurement system according to one of claims 1 to 9, **characterised in that** the measurement element receptacle (1) is made of steel, of aluminum, of an aluminum alloy or of plastic.

## Revendications

1. Système de mesure comprenant un logement d'élément de mesure (1), de construction plate, avec des surfaces de dessus (2) pratiquement parallèles, convenant pour le montage entre deux parties de machine transmettant un couple et/ou une force, avec au moins un élément de mesure piézoélectrique (10, 20), cet élément de mesure (10, 20) étant placé dans un orifice traversant (3) du logement d'élément de mesure (1),
système **caractérisé en ce que**
au moins cet élément de mesure (10, 20) est fixé dans l'orifice traversant (3) avec un jeu mécanique défini **en ce qu'**au moins cet élément de mesure (10, 20) présente à sa surface périphérique (11) des structures qui pénètrent avec du jeu dans au moins une direction de l'espace, parallèle aux surfaces de dessus (2) et/ou normale aux surfaces de dessus (2) dans des structures correspondantes de la paroi périphérique (4) de l'orifice traversant (3).

2. Système de mesure selon la revendication 1,
**caractérisé en ce que**
la surface périphérique (11) de cet élément de mesure (10, 20) a une rainure annulaire (13) qui reçoit au moins un élément de ressort (6), cet élément de ressort (6) pénétrant dans une rainure annulaire (5) de la paroi périphérique (4) de l'orifice traversant (3).

3. Système de mesure selon la revendication 2,
**caractérisé en ce que**
l'élément de ressort (6) est réalisé comme ressort en anneau ouvert d'un côté.

4. Système de mesure selon la revendication 1,
**caractérisé en ce que**
au moins cet élément de mesure (10, 20) est réalisé sous la forme d'un jonc périphérique (14) qui vient prendre dans une rainure annulaire (5) de l'orifice traversant (3), cette rainure annulaire (5) étant délimitée d'une part, par une pièce de base (7) et d'autre part, par un couvercle (8) de logement d'élément de mesure (1) qui se place dans la pièce de base (7).

5. Système de mesure selon l'une des revendications 1 à 4,
**caractérisé en ce que**
cet élément de mesure (10, 20)
- vu dans une direction perpendiculaire aux surfaces de dessus (2), parallèles-plan du logement d'élément de mesure (1),
- est de forme circulaire fermée ou en forme d'anneau de cercle avec un orifice traversant (15).

6. Système de mesure selon l'une des revendications 1 à 5,
**caractérisé en ce que**
au moins un orifice traversant (3) est réalisé comme trou oblong (23) dans le logement d'élément de mesure (1).

7. Système de mesure selon l'une des revendications 1 à 6,
**caractérisé en ce que**
plusieurs éléments de mesure (10, 20) sont de préférence équidistants dans la direction périphérique dans un logement d'éléments de mesure (1) en forme d'anneau circulaire.

8. Système de mesure selon l'une des revendications 1 à 6,
**caractérisé en ce que**
plusieurs éléments de mesure (10, 20) sont prévus dans des positions prédéfinies d'une plaque de mesure de force.

9. Système de mesure selon la revendication 7 ou 8,
**caractérisé en ce que**
le logement d'élément de mesure (1) comprend une pièce de base (7) et un couvercle (8) qui se place dans la pièce de base (7), cette pièce de base (7) ayant à partir des positions des différents éléments de mesure (10, 20), des dégagements (9) pour recevoir le branchement électrique (16) des éléments de mesure (10, 20).

10. Système de mesure selon l'une des revendications 1 à 9, **caractérisé en ce que**
le logement d'élément de mesure (1) est en acier, en aluminium, en un alliage d'aluminium ou en une matière plastique.
